# EUROPÄISCHE PATENTSCHRIFT

(11) **EP 3 609 731 B1**
(45) Veröffentlichungstag und Bekanntmachung des Hinweises auf die Patenterteilung: **26.01.2022**
(21) Anmeldenummer: 18702074.8
(22) Anmeldetag: 09.01.2018
(51) Int. Cl.: B60L 53/30, B60L 53/65

(54) **VERFAHREN ZUR STEUERUNG EINES LADEVORGANGS EINES FAHRZEUGS AN EINER LADESÄULE, UNTER VERWENDUNG ERSTES UND ZWEITES BERECHTIGUNGSNACHWEISES**
METHOD FOR CONTROLLING A CHARGING PROCESS OF A VEHICLE AT A CHARGING POST USING FIRST AND SECOND AUTHORISATION VERIFICATION
PROCÉDÉ POUR COMMANDER UN PROCESSUS DE CHARGE D'UN VÉHICULE À UNE BORNE DE CHARGE, AU MOYEN DE PREMIÈRES ET DE DEUXIÈMES DONNÉES D'IDENTIFICATION

(30) Priorität: 13.04.2017 DE 102017206369
(43) Veröffentlichungstag der Anmeldung: 19.02.2020
(73) Patentinhaber: Ecog GmbH, 82041 Oberhaching (DE)
(72) Erfinder: HEUER, Jörg, 82041 Oberhaching (DE)
(74) Vertreter: Fink Numrich Patentanwälte PartmbB
(86) Internationale Anmeldenummer: PCT/EP2018/050392
(87) Internationale Veröffentlichungsnummer: WO 2018/188818

(56) Entgegenhaltungen:
- WO-A1-2013/010592
- WO-A1-2014/061249
- WO-A1-2015/043247
- US-A1- 2011 270 480

## Beschreibung

Die Erfindung betrifft ein Verfahren zur Steuerung eines Ladevorgangs eines Fahrzeugs an einer Ladesäule.

Ladesäulen zum elektrischen Laden von Elektrofahrzeugen bzw. zumindest teilweise mit elektrischer Energie angetriebene Fahrzeuge sind hinlänglich bekannt. Zum Laden wird das Elektrofahrzeug an einer Ladesäule abgestellt, um dessen Akkumulatoren über ein Elektrokabel oder mittels Induktionsspulen aufzuladen. Bekannt sind öffentliche Ladesäulen, welche ein Laden gegen ein Entgelt bereitstellen. Zur Verrechnung der entnommenen elektrischen Energie oder auch anderer Ladedienstleistungen sind mehrere Verfahren zur Identifizierung und Autorisierung eines Ladesäulennutzers an einer Ladesäule bekannt.

Bekannt ist beispielsweise ein Einsatz von Karten oder auch Kreditkarten zur drahtlosen Identifizierung oder Autorisierung eines Ladesäulennutzers. Mit Hilfe übergebener Identifikationsdaten der Karte wird in der Ladesäule - eventuell unter Beteiligung eines von der Ladesäule örtlich getrennten Autorisierungsserver - die Identität oder Autorisierung des Karteninhabers überprüft, bevor eine Ladefreigabe seitens der Ladesäule erfolgt.

Gängige Karten umfassen Kontaktlose RFID-Karten (Radio Frequency Identification), welche beispielsweise durch sogenannte Mobility Operators ausgegeben werden. Ein Ladesäulennutzer bringt eine derartige Karte in den Wirkungsbereich eines an der Ladesäule angebrachten RFID-Transponders, woraufhin der Ladevorgang bei entsprechender Autorisierung des Ladesäulennutzers nach dem Verbinden des Ladekabels gestartet wird.

Auch mobile Endgeräte wie z.B. Smartphones mit einer entsprechenden darauf zum Ablauf gebrachten Applikation sind zur Identifikation und Autorisierung eines Ladesäulennutzers sowie für ein elektronisches Bezahlen an Ladesäulen geeignet. Nach Bestätigung der Identität - welche optional mit zusätzlichen Authentifizierungsmerkmalen wie Geheimzahleneingabe, Fingerabdrucküberprüfung usw. einhergeht - erfolgt eine Autorisierung, also eine Ermittlung, ob der identifizierte Ladesäulennutzer zu einer Nutzung berechtigt ist.

Üblicherweise sehen Verfahren zur Autorisierung eines Ladesäulennutzers mit einem mobilen Endgerät vor, dass mit dem mobilen Endgerät eine Kommunikationsverbindung zu einem entfernt liegenden Autorisierungsserver aufgebaut wird, an dem registrierte Ladesäulennutzer verwaltet werden und welcher eine Zuordnung von Ladesäulen zu jeweiligen Ladesäulennutzern steuert. Über die Kommunikationsverbindung wird dem Autorisierungsserver eine Identität des Ladesäulennutzers sowie eine Identität einer ausgewählten Ladesäule mitgeteilt. Der Autorisierungsserver übermittelt, nach Authentifizierung und Prüfung einer Autorisierung des Ladesäulennutzers, eine Ladefreigabe an die ausgewählte Ladesäule, woraufhin der Ladesäulennutzer, zum Beispiel durch Verbindung des Ladekabels mit dem Fahrzeug, ein Starten des Ladevorgangs veranlassen kann.

Bei erfolgter Verbindung des Ladekabels zwischen dem Fahrzeug und der Ladesäule wird der Ladevorgang in Folge der Ladefreigabe gestartet. Während des Ladevorgangs wird der Stecker zumindest am Fahrzeug verriegelt, so dass dieser nicht bei einem laufenden Ladevorgang gelöst oder abgezogen werden kann. Zum Schutz vor einer unautorisierten Bedienung der Ladesäule durch Dritte ist nach einem Starten des Ladevorgangs eine erneute Prüfung der Identität und/oder Autorisierung durch das auch zur Ladefreigabe gewählte Identifikationsmittel - Karte und/oder mobiles Endgerät - erforderlich, um den Ladevorgang zu steuern.

Unter einer Steuerung des Ladevorgangs ist in dieser Beschreibung eine Überwachung des Ladevorgangs, eine Modifikation des Ladevorgangs und/oder ein Stoppen oder Beenden des Ladevorgangs zu verstehen. Eine Modifikation des Ladevorgangs umfasst beispielsweise einen Wechsel auf eine höhere Ladeleistung, nachdem der Ladevorgang begonnen hat.

Die im Stand der Technik erforderliche Verwendung des auch zur Ladefreigabe verwendeten Identifikationsmittels, um den Ladevorgang zu beenden, weist gravierendere Nachteile auf.

Ladesäulen können an einer Vielzahl möglicher Orte vorgesehen sein, beispielsweise an Parkplätzen von Autobahnraststätten, am Straßenrand, oder auch in Parkhäusern. Insbesondere entlang von Fernstrecken installierte Ladesäulen befinden sich oftmals in einem Bereich, welcher nur unzureichend durch ein Mobilfunknetz versorgt ist, so dass ein Aufbau der Kommunikationsverbindung des mobilen Endgeräts mit dem Autorisierungsserver zum Zweck einer Identifikation oder Autorisierung gestört oder unmöglich sein kann. Auch sind vorübergehende Störungen oder Beeinträchtigungen des Mobilfunknetzes bekannt, welche eine Kommunikationsverbindung vorübergehend beeinträchtigen oder unmöglich machen.

Ein Ladesäulennutzer, welcher einen laufenden Ladevorgang aufgrund eines während des Ladevorgangs eingetretenen Zwischenfalls kurzfristig beenden oder in anderer Weise steuern möchte, könnte in einem solchen Fall keine Verbindung mit dem Autorisierungsserver herstellen, um den Ladevorgang zu stoppen. Ein solcher Zwischenfall könnte beispielsweise ein Notfall oder ein kurzfristig zur Kenntnis genommener Termin sein, welcher ein kurzfristiges Unterbrechen des Ladevorgangs erforderlich macht. Zwar kann an der Ladesäule ein Not-Aus-Taster vorgesehen sein, dessen Betätigen ein unmittelbares Beenden des Ladevorgangs und ein Lösen der Ladestecker-Verriegelung auslösen würde. Ein Ladesäulennutzer würde aber abzuwägen haben, ob die Dringlichkeit des eingetretenen Zwischenfalls eine Betätigung des Not-Aus-Tasters rechtfertigen würde, zumal nach dessen Betätigung Betriebsstörungen, zumindest aber eine länger andauernde Betriebsunterbrechung der Ladesäule zu erwarten wäre, für die der Ladesäulennutzer haftbar gemacht werden könnte.

Auch bei Verwendung einer Karte anstelle eines mobilen Endgeräts kann es zu einer Situation kommen, in der das Auffinden der Karte, welche zum Zwecke der Identifikation des berechtigten Ladesäulennutzers auch zum Beenden oder für eine sonstige Steuerung des Ladevorgangs erforderlich ist, aufgrund eines durch den Zwischenfall eingetretenen Zeitdrucks mit erheblichen Härten und Schwierigkeiten verbunden ist.

Die Druckschrift WO 2013/010592 A1 offenbart ein Verfahren zum Laden eines Elektrofahrzeugs mittels einer Ladestation, bei dem der Ladevorgang über ein drahtloses Telekommunikationsendgerät gesteuert werden kann, das über eine Nahfeldkommunikation mit einer Steuereinrichtung der Ladestation kommuniziert.

In dem Dokument WO 2015/043247 A1 ist ein Verfahren zu Autorisierung eines Ladevorgangs zwischen einem Fahrzeug und einer Ladesäule unter Verwendung einer drahtlosen Kommunikationsverbindung zwischen Fahrzeug und Ladesäule beschrieben. Dabei wird mittels einer Nutzerinformation aus einer eingelesenen Nutzerkarte eine Authentisierung an einer Geräteverwaltungseinheit durchgeführt. Die entsprechende Authentisierungsanfrage und Authentisierungsantwort werden zwischen dem Fahrzeug und der Geräteverwaltungseinheit unter Zwischenschaltung der Ladesäule übertragen.

Aufgabe der vorliegenden Erfindung ist es, ein Verfahren zur Steuerung eines Ladevorgangs eines Fahrzeugs an einer Ladesäule anzugeben, welches ein alternatives Identifikationsmittel zur Steuerung des Ladevorgangs vorsieht, für das keine Verbindung zu einem entfernt liegenden Autorisierungsserver über ein Mobilfunknetz erforderlich ist.

Die Aufgabe wird durch ein Verfahren mit den Merkmalen des Patentanspruchs 1 gelöst.

Grundlegende Idee der Erfindung ist es, unabhängig von einem anfänglich für die Ladefreigabe verwendeten Identifikationsmittel - also Karte und/oder mobiles Endgerät - ein weiteres Identifikationsmittel bereitzustellen, durch welches der Ladevorgang gesteuert werden kann. Das weitere Identifikationsmittel wird über eine Steuerverbindung realisiert, welche als Nahfeldkommunikationsverbindung zwischen dem mobilen Endgerät mit einer Steuerungsvorrichtung der Ladesäule eingerichtet wird und welche eine Entgegennahme einer Steuerungsanweisung seitens der Steuerungsvorrichtung zur Steuerung des Ladevor-gangs ermöglicht.

Erfindungsgemäß wird eine Steuerungsvorrichtung verwendet, welcher Teil einer Ladesäule ist oder einer solchen zugordnet ist. Eine Ladesäule bezeichnet eine allgemeine Vorrichtung, an der eine Aufladung eines Fahrzeugs mit elektrischer Energie erfolgt und umfasst auch Ladestationen, Wall Boxes etc.

Gemäß dem erfindungsgemäßen Verfahren wird eine Steuerung eines Ladevorgangs eines Fahrzeugs an einer Ladesäule durchgeführt, wobei unabhängig von einem anfänglich für die Ladefreigabe verwendeten Identifikationsmittel eine zur Steuerung des Ladevorgangs vorgesehene Steuerverbindung mithilfe eines in einem mobilen Endgerät hinterlegten zweiten Berechtigungsnachweises bereitgestellt wird, umfassend folgende Schritte:
a) Verwendung eines für einen Beginn des Ladevorgangs verwendeten ersten Berechtigungsnachweises durch eine der Ladesäule zugeordnete Steuerungsvorrichtung;
b) Übertragung des ersten Berechtigungsnachweises oder des endgerätseitigen zweiten Berechtigungsnachweises zwischen dem mobilen Endgerät und der der Ladesäule zugeordneten Steuerungsvorrichtung über eine Nahfeldkommunikationsverbindung;
c) paarweise Prüfung des ersten Berechtigungsnachweises anhand des zweiten Berechtigungsnachweises; und
d) bei positivem Ergebnis der Prüfung, Einrichtung einer Steuerverbindung zwischen dem mobilen Endgerät (MD) über die Nahfeldkommunikationsverbindung mit der Steuerungsvorrichtung.

Die Reihenfolge der Schritte ist dabei nicht festgelegt, insbesondere kann auch, wie im Folgenden erläutert, Verfahrensschritt a) vor dem Verfahrensschritt b) erfolgen.

Für eine Ausbildung der erfindungsgemäßen Steuerverbindung wird ein zuvor für eine Autorisierung des Ladevorgangs bzw. für einen Beginn des Ladevorgangs verwendeter erster Berechtigungsnachweis verwendet, der beispielsweise an der Steuerungsvorrichtung ursprünglich empfangen wurde.

Für den erfindungsgemäß verwendeten ersten Berechtigungsnachweis ist es insbesondere unerheblich, ob der zuvor für eine Autorisierung des Ladevorgangs verwendete erste Berechtigungsnachweis dem zu ladenden Fahrzeug, einer für eine Autorisierung des Ladevorgangs verwendeten RFID- oder Kreditkarte oder auch von einem Autorisierungsserver bezogen wurde.

Die Erfindung zeichnet sich durch eine asynchrone - d.h. bezüglich ihrer Reihenfolge und ihres zeitlichen Ablaufs nicht festgelegten - Übertragung von Berechtigungsnachweisen aus, welche in ihrer Zusammenwirkung mit einer Nahfeldkommunikationsverbindung zu einer Einrichtung einer Steuerverbindung zwischen der Ladesäule und dem mobilen Endgerät führt, über die das Laden mit Ausbildung der Steuerverbindung seitens des mobilen Endgerät gestoppt, angehalten oder beendet werden kann. Auf dem mobilen Endgerät wird eine geeignete Applikation zur Ausführung gebracht, durch welche Steuerungsanweisungen in Form von Benutzereingaben entgegengenommen und über die Steuerverbindung an die Steuerungsvorrichtung der Ladesäule übertragen wird, in welcher der Ladevorgang aufgrund der Benutzereingaben gesteuert wird. Eine wichtige Steuerung des Ladevorgangs umfasst insbesondere ein vorübergehendes Stoppen, Anhalten oder Beenden des Ladevorgangs, wodurch eine eventuelle während des Ladevorgangs aktivierte Verriegelung eines Ladesteckers gelöst wird. Über die Steuerverbindung ist auch eine gegenläufige Übertragung von Ladestatusmeldungen möglich, welche von der Steuerungsvorrichtung über die eingerichtete Steuerverbindung an das mobile Endgerät übertragen werden.

Die Steuerverbindung ist erfindungsgemäß als Nahfeldkommunikationsverbindung ausgestaltet und ist damit in vorteilhafter Weise unabhängig von einer Mobilfunknetzabdeckung.

Der erste Berechtigungsnachweis, in der Fachwelt auch als Credentials bekannt, dient einem Nachweis einer Identität des Fahrzeugs bzw. des Ladesäulennutzer. Dieser Berechtigungsnachweis kann gegebenenfalls vorübergehend und ad hoc gebildet werden, also beispielsweise lediglich für den Zweck der Ausbildung der Steuerverbindung.

Der erste Berechtigungsnachweis kann ein oder mehrere Kennzeichnungen der Authentizität enthalten, im derzeitigen Stand der Technik meist durch digitale kryptografische Signaturen dargestellt. Der zum Beginn des Ladevorgangs empfangene Berechtigungsnachweis respektive die enthaltenen Signaturen können von einer weiteren Instanz überprüft werden, insbesondere von der Steuerungsvorrichtung oder von einem Autorisierungsserver, welcher mit der Ladesäule über ein Datennetzwerk oder über eine Steuerungsleitung verbunden ist. Dazu kann die überprüfende Instanz unter anderem die kryptografischen Signaturen komplett oder teilweise verifizieren anhand von entsprechendem Schlüsselmaterial. Dieses Schlüsselmaterial kann zusätzlich bezogen werden, ggf. in Form eines Objektes, das wiederum von einer dritten Stelle authentifiziert wurde, die für die Ladesteuerung vertrauenswürdig ist.

Der Nachweis erfolgt beispielsweise in Form einer Benutzerkennung in Verbindung mit mindestens einem Authentifizierungsmerkmal, welches beispielsweise unter Verwendung eines asymmetrischen Schlüsselpaares implementiert ist.

Die erfindungsgemäß eingesetzte Nahfeldkommunikationsverbindung zwischen der Steuerungsvorrichtung der Ladesäule und dem mobilen Endgeräts dient einer Übertragung des ersten Berechtigungsnachweises oder des endgerätseitigen zweiten Berechtigungsnachweises, vorzugsweise entweder einer Übertragung des ersten Berechtigungsnachweises von der Steuerungsvorrichtung an das mobile Endgerät oder einer Übertragung des endgerätseitigen Berechtigungsnachweises vom mobilen Endgerät an die Steuerungsvorrichtung.

Die vorstehenden Ausführungen bezüglich digitaler kryptografischer Signaturen gelten analog für den endgeräteseitigen zweiten Berechtigungsnachweis. Der erste Berechtigungsnachweis bildet mit dem endgerätseitigen zweiten Berechtigungsnachweises ein Berechtigungsnachweispaar, welcher beispielsweise im Vorfeld aufgrund einer Anmeldung bei einem Ladesäulenanbieter jeweils zum Ladestart sowie im mobilen Endgerät hinterlegt wurden.

Eine Nahfeldkommunikation im Sinne dieser Beschreibung umfasst alle drahtlosen Kommunikationsweisen, welche nicht auf ein Übertragungsverfahren mit einem zellulären Mobilfunknetz beruhen. Insbesondere ist der Begriff Nahfeldkommunikationsschnittstelle bzw. Nahfeldkommunikation im Sinne dieser Beschreibung nicht auf das ähnlich lautende Übertragungsverfahren »Near Field Communication« oder NFC zum kontaktlosen Austausch von Daten per elektromagnetischer Induktion beschränkt.

Eine nach Prüfung des Berechtigungsnachweispaars eingerichtete Steuerverbindung mit der Ladesäule ermöglicht es dem Ladesäulenbenutzer, den Ladevorgang zu steuern, insbesondere auch zu beenden. Unter einer Beendigung des Ladevorgangs ist, je nach Ausgestaltung einer Applikation am mobilen Endgerät auch die Möglichkeit einer vorübergehenden Beendigung zu verstehen, welche den Ladevorgang unterbricht mit der Möglichkeit, diesen wieder aufzunehmen.

Weitere Ausgestaltungen der Erfindung sind Gegenstand der abhängigen Patentansprüche.

Im Weiteren werden Ausführungsformen des erfindungsgemäßen Verfahrens und der erfindungsgemäßen Steuerungsvorrichtung unter Bezug auf die beigefügten Figuren beschrieben.

Es zeigen:
- Fig. 1: ein Blockschaltbild zur Darstellung einer Ladeinfrastruktur;
- Fig. 2: ein Ablaufbild zur Darstellung einer Ausführungsform des erfindungsgemäßen Verfahrens; und;
- Fig. 3: ein Ablaufbild zur Darstellung einer weiteren Ausführungsform des erfindungsgemäßen Verfahrens.

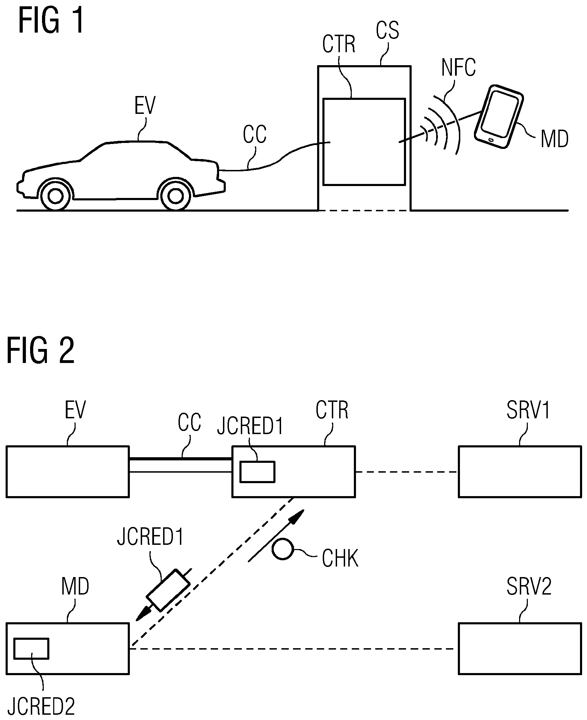

Fig. 1 zeigt ein an einer Ladesäule CS abgestelltes Fahrzeug EV. Eine Energieübertragung zwischen der Ladesäule CS und dem Fahrzeug EV erfolgt im dargestellten Ausführungsbeispiel über ein Ladekabel CC. Alternativ kann ein Laden des Fahrzeugs EV induktiv mittels mehrerer von der Ladesäule gespeister Induktionsspulen erfolgen. Weitere fachübliche Funktionskomponenten innerhalb der Ladesäule CS, welche die Bereitstellung und Aufbereitung des elektrischen Ladestromstroms betreffen, sind aus Übersichtlichkeitsgründen nicht dargestellt. Der Ladesäule CS ist eine erfindungsgemäße Steuerungsvorrichtung CTR zugeordnet oder in dieser integriert.

Die Steuerungsvorrichtung CTR weist eine drahtlose Nahfeldkommunikationsverbindung NFC zur Verbindung mit einer entsprechenden - nicht dargestellten - Nahfeldkommunikationsschnittstelle des mobilen Endgeräts MD auf.

Die drahtlose und bidirektionale Nahfeldkommunikationsverbindung NFC zwischen der Steuerungsvorrichtung CTR und dem mobilen Endgerät MD ist beispielweise unter Verwendung üblicher Nahfeldkommunikationsprotokolle ausgestaltet. Diese umfassen beispielsweise:
- WLAN (Wireless Local Area Network) bzw. WiFi (Wireless Fidelity), beispielsweise gemäß einem Kommunikationsstand der Standard-Familie IEEE 802.11;
- Bluetooth gemäß einem Kommunikationsstand IEEE 802.15.1, Bluetooth Low Energy oder BLE gemäß einer Erweiterung der Bluetooth-Spezifikationen, beispielsweise gemäß Bluetooth Low Energy Spezifikation 4.2; und/oder;
- Übertragungsverfahren zum kontaktlosen Austausch von Daten per elektromagnetischer Induktion mittels lose gekoppelter Spulen, auf welche auch als Near Field Communication Bezug genommen wird.

Auf der Nahfeldkommunikationsverbindung NFC erfolgt eine Übertragung eines Berechtigungsnachweispaares zwischen der Steuereinrichtung CTR und dem mobilen Endgerät MD.

Die Steuerungsvorrichtung CTR weist optional Mittel zur Unterhaltung einer Datenkommunikation mit einem - nicht dargestellten - Autorisierungsserver auf. Der Autorisierungsserver unterstützt in bekannter Weise eine Benutzerverwaltung, Identifizierung sowie eine Autorisierung für den Ladevorgang seitens der Ladesäule CS. Außerdem kann dieser oder ein anderer Server weitere Aufgaben wie eine Ermittlung sowie eine Verrechnung der an der Ladesäule CS entnommenen elektrischen Energie übernehmen.

In Fig. 2 ist ein Ablaufbild zur Darstellung einer ersten Ausführungsform des erfindungsgemäßen Verfahrens dargestellt. Für eine Ausbildung der erfindungsgemäßen Steuerverbindung wird ein zuvor für eine Autorisierung des Ladevorgangs bzw. für einen Beginn des Ladevor-gangs verwendeter erster Berechtigungsnachweis JCRED1 verwendet. Dieser wurde zuvor von einem beliebigen - nicht dargestellten - Quelle zur Autorisierung eines Starts des Ladevorgangs an die Steuerungsvorrichtung CTR übertragen. Die Quelle der für einen Beginn des Ladevorgangs verwendeten ersten Berechtigungsnachweis JCRED1 umfasst, je nach Ausgestaltung des zugrundeliegenden - für die Erfindung aber unerheblichen - Autorisierungsverfahrens zur Autorisierung eines Starts des Ladvorgangs beispielswiese:
- das Fahrzeug EV, von dem der zur Autorisierung des Ladevorgangs dienende erste Berechtigungsnachweis JCRED1 über das Ladekabel CC oder parallel zu diesem an die Steuerungsvorrichtung CTR übertragen wurde;
- ein Autorisierungsserver, von dem der zur Autorisierung des Ladevorgangs dienende erste Berechtigungsnachweis JCRED1 über eine - gestrichelt gezeichnete - Datenverbindung an die Steuerungsvorrichtung CTR übertragen wurde; und/oder;
- ein Speicherbereich einer - nicht dargestellten - Identifikationskarte, RFID-Karte oder Kreditkarte, aus dem der zur Autorisierung des Ladevorgangs dienende erste Berechtigungsnachweis JCRED1 über eine - gestrichelt gezeichnete - Datenverbindung seitens der Steuerungsvorrichtung CTR kontaktgebunden oder drahtlos eingelesen wurde.

Die Ausbildung der erfindungsgemäßen Steuerverbindung ist insbesondere unabhängig von einer zuvor ausgebildeten Kommunikationsverbindung zur Autorisierung des Ladestarts.

Zur Ausbildung der erfindungsgemäßen Steuerverbindung wird der erste Berechtigungsnachweises JCRED1 oder ein endgerätseitiger zweiter Berechtigungsnachweis JCRED2 zwischen dem mobilen Endgerät MD und der Steuerungsvorrichtung CTR über die Nahfeldkommunikationsverbindung NFC übertragen.

Gemäß der in Fig. 2 gezeigten Ausführungsform des erfindungsgemäßen Verfahrens empfängt das betriebsbereite mobile Endgerät MD des Ladesäulennutzers den ersten Berechtigungsnachweises JCRED1 über die Nahfeldkommunikationsverbindung NFC. Nach Empfang des ersten Berechtigungsnachweises JCRED1 durch eine am mobilen Endgerät MD des Ladesäulennutzers zum Ablauf gebrachten Applikation erfolgt eine endgerätseitige Prüfung des ersten Berechtigungsnachweises JCRED1 anhand des endgerätseitig vorgehaltenen zweiten Berechtigungsnachweises JCRED2. Diese paarweise Prüfung der Berechtigungsnachweise JCRED1, JCRED2 umfasst im einfachsten Fall eine Prüfung einer Identität, einer Prüfsumme oder eines gemeinsamen Zertifikats oder Schlüsselpaares.

Der erste Berechtigungsnachweis JCRED1 bildet mit dem endgerätseitigen zweiten Berechtigungsnachweises JCRED2 ein Berechtigungsnachweispaar, wobei der zweite Berechtigungsnachweises JCRED2 im Vorfeld aufgrund einer Anmeldung bei einem Ladesäulenanbieter im mobilen Endgerät hinterlegt wurde.

Bei positiven Ergebnis der endgerätseitigen Prüfung des ersten Berechtigungsnachweises JCRED1 anhand des endgerätseitig vorgehaltenen zweiten Berechtigungsnachweises JCRED2 erfolgt im Anschluss eine Übertragung einer positiven Prüfungsnachricht CHK vom mobilen Endgerät MD an die Steuerungsvorrichtung CTR.

Nach Empfang der positiven Prüfungsnachricht CHK seitens der Steuerungsvorrichtung CTR erfolgt eine Einrichtung der Steuerverbindung mit dem mobilen Endgerät MD, welche eine Steuerung der Ladesäule CS durch das mobile Endgerät MD ermöglicht.

Diese Steuerverbindung wird zum Steuern des Ladevorgangs durch die Steuerungsvorrichtung CTR eingerichtet, beispielsweise, indem eine am mobilen Endgerät MD entgegengenommenen Beendigungsanweisung über diese Steuerverbindung an die Steuerungsvorrichtung CTR übergeben wird, durch welche der Ladevorgang gestoppt wird.

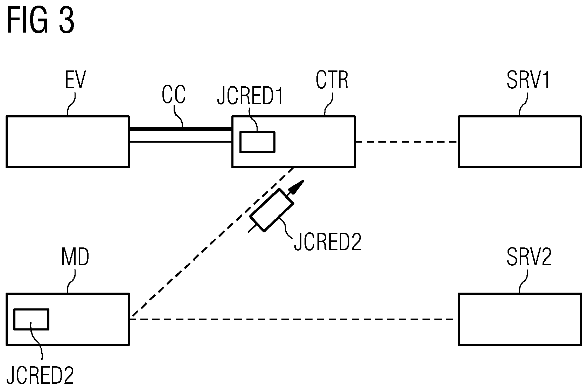

Fig. 3 zeigt eine alternative Ausführungsform, bei der im mobilen Endgerät MD keine endgerätseitige Prüfung beider Berechtigungsnachweise JCRED1, JCRED2 erfolgt. Stattdessen wird der endgerätseitige zweite Berechtigungsnachweises JCRED2 vom mobilen Endgerät MD an die Steuerungsvorrichtung CTR gesendet, wo die Prüfung beider Berechtigungsnachweise JCRED1,JCRED2 erfolgt. In dieser Ausführungsform wird also vom mobilen Endgerät MD keine Prüfungsnachricht CHK an die Steuerungsvorrichtung CTR versendet, sondern, ohne dass eine Prüfung im mobilen Endgerät stattfindet, der endgerätseitige Berechtigungsnachweises JCRED2. Die Prüfung findet dann in der Steuerungsvorrichtung CTR statt.

In einer unmittelbaren Nachbarschaft mehrerer Ladesäulen CS wird bei Übergabe des endgerätseitiger Berechtigungsnachweis JCRED2 eine Nachfeldkommunikationsverbindung zu mehreren Ladesäulen CS aufgebaut und gewissermaßen mehrere potentielle Steuerverbindungen zum mobilen Endgerät MD bereitgestellt. Erst nach positiver Prüfung des zweiten Berechtigungsnachweis JCRED2 anhand des zugehörigen, also »passenden« ersten Berechtigungsnachweis JCRED1 wird eine ein-eindeutige Steuerverbindung zwischen der Ladesäule CS und dem mobilen Endgerät MD hergestellt. Alle anderen Ladesäulen beenden die vorübergehend ausgebildeten Nachfeldkommunikationsverbindungen aufgrund fehlgeschlagener Prüfung eines nicht passenden Berechtigungsnachweispaares.

Nach Ausbildung der Steuerverbindung zum mobilen Endgerät des Ladesäulennutzers ist eine Steuerung, beispielweise eine Beendigung des Ladevorgangs durch das mobile Endgerät MD ermöglicht.

In einer weiteren - zeichnerisch nicht dargestellten - Ausführungsform ist vorgesehen, dass der erste Berechtigungsnachweis JCRED1 an das Mobilgerät MD übertragen wird, bevor oder nachdem der endgerätseitige zweite Berechtigungsnachweis JCRED2 an die der Ladesäule CS zugeordnete Steuerungsvorrichtung CTR übergeben wird.

Zum Schutz vor Manipulationen gegenüber bösgläubigen Ladesäulennutzern oder auch gegenüber bösgläubigen Ladesäulenbetreibern kann in verschiedenen Fortbildungen der Erfindung eine kryptographische Sicherung der Datenkommunikation sowie eine zertifikatbasierte Überprüfung der Berechtigungsnachweise JCRED1; JCRED2 erfolgen.

Gemäß einer vorteilhaften Fortbildung der Erfindung ist vorgesehen, die Nahfeldkommunikationsverbindung NFC zwischen der Steuerungsvorrichtung CTR und dem mobilen Endgerät MD kryptographisch zu sichern. Eine Sicherung erfolgt vorzugsweise unter Beteiligung eines digitalen Zertifikats, zur kryptographisch gesicherten Bestätigung von Eigenschaften, insbesondere eines Public-Key-Zertifikat zur Bestätigung öffentlicher Schlüssel.

In einer Ausführungsform ist eine Beteiligung eines vorläufig verifizierten digitalen Zertifikats vorgesehen. Gemäß dieser Ausführungsform ist ein Senden eines vorläufig verifizierten digitalen Zertifikates des mobilen Endgeräts MD oder einer daraus extrahierten Prüfinformation vom mobilen Endgerät MD über die aufgebaute Nahfeldkommunikationsverbindung NFC zur Steuerungsvorrichtung CTR vorgesehen, anhand welcher die Steuerungsvorrichtung CTR, optional in Zusammenarbeit mit dem Autorisierungsserver SRV1 eine Autorisierungsprüfung des mobilen Endgerät MD durchführt. Anschließend wird ein Ergebnis dieser Prüfung vom Autorisierungsserver SRV1 zur Steuerungsvorrichtung CTR, welche in Abhängigkeit des empfangenen Autorisierungsprüfergebnisses eine Steuerung der Ladesäule CS durch das mobile Endgerät MD freigibt oder nicht.

Je nach Implementierung ist das vorläufig verifizierte digitale Zertifikat entweder Bestandteil des endgerätseitigen Berechtigungsnachweises JCRED2 oder der endgerätseitigen Berechtigungsnachweises JCRED2 ist Bestandteil des vorläufig verifizierten digitalen Zertifikats. Dies gilt in gleicher Weise für den ersten Berechtigungsnachweises JCRED1.

Bei einer Ausführungsform des erfindungsgemäßen Verfahrens wird die Nahfeldkommunikationsverbindung NFC mittels eines Protokolls zur Verschlüsselung von Datenübertragungen kryptographisch geschützt, beispielsweise mittels Transport Layer Security bzw. TLS, Secure Sockets Layer bzw. SSL oder Internet Protocol Security bzw. IPsec.

Zusammenfassend besteht die grundlegende Idee der Erfindung darin, unabhängig von einem anfänglich für die Ladefreigabe verwendeten Identifikationsmittel - also Karte und/oder mobiles Endgerät - ein weiteres Identifikationsmittel bereitzustellen, durch welches der Ladevorgang gesteuert, also überwacht, modifiziert, angehalten oder beendet werden kann. Das weitere Identifikationsmittel wird über eine Steuerverbindung realisiert, welche als Nahfeldkommunikationsverbindung zwischen dem mobilen Endgerät mit einer Steuerungsvorrichtung der Ladesäule eingerichtet wird und welche eine Entgegennahme einer Beendigungsanweisung seitens der Steuerungsvorrichtung zum Beenden des Ladevorgangs ermöglicht.

## Patentansprüche

1. Verfahren zur Steuerung eines Ladevorgangs eines Fahrzeugs (EV) an einer Ladesäule (CS), wobei unabhängig von einem anfänglich für die Ladefreigabe verwendeten Identifikationsmittel eine zur Steuerung des Ladevorgangs vorgesehene Steuerverbindung mithilfe eines in einem mobilen Endgerät (MD) hinterlegten zweiten Berechtigungsnachweises (JCRED2) bereitgestellt wird, umfassend folgende Schritte:
a) Verwendung eines für einen Beginn des Ladevorgangs verwendeten ersten Berechtigungsnachweises (JCRED1) durch eine der Ladesäule (CC) zugeordnete Steuerungsvorrichtung (CTR);
b) Übertragung des ersten Berechtigungsnachweises (JCRED1) oder des endgerätseitigen zweiten Berechtigungsnachweises (JCRED2) zwischen dem mobilen Endgerät (MD) und der der Ladesäule (CC) zugeordneten Steuerungsvorrichtung (CTR) über eine Nahfeldkommunikationsverbindung (NFC);
c) paarweise Prüfung des ersten Berechtigungsnachweises (JCRED1) anhand des zweiten Berechtigungsnachweises (JCRED2); und
d) bei positivem Ergebnis der Prüfung, Einrichtung einer Steuerverbindung zwischen dem mobilen Endgerät (MD) über die Nahfeldkommunikationsverbindung (NFC) mit der Steuerungsvorrichtung (CTR).

2. Verfahren gemäß Patentanspruch 1, wobei die Steuerung des Ladevorgangs über die Steuerverbindung zumindest eine Überwachung des Ladevorgangs, eine Modifikation des Ladevorgangs, ein Beenden des Ladevorgangs und/oder ein vorübergehendes Stoppen des Ladevorgangs umfasst.

3. Verfahren gemäß einem der vorgenannten Patentansprüche,
- wobei für eine Übertragung gemäß Schritt b) ein Senden des ersten Berechtigungsnachweises (JCRED1) von der Steuerungsvorrichtung (CTR) über die Nahfeldkommunikationsverbindung (NFC) an das mobile Endgerät (MD) erfolgt; und
- wobei die paarweise Prüfung gemäß Schritt c) im mobilen Endgerät (MD) durchgeführt wird.

4. Verfahren gemäß einem der vorgenannten Patentansprüche 1 und 2,
- wobei für eine Übertragung gemäß Schritt b) ein Senden des zweiten Berechtigungsnachweises (JCRED2) vom mobilen Endgerät (MD) über die Nahfeldkommunikationsverbindung (NFC) an die Steuerungsvorrichtung (CTR) erfolgt; und
- wobei die paarweise Prüfung gemäß Schritt c) in der Steuerungsvorrichtung (CTR) durchgeführt wird.

5. Verfahren gemäß einem der vorgenannten Patentansprüche,
- wobei nach einer am mobilen Endgerät (MD) entgegengenommenen Steuerungsanweisung die Steuerungsanweisung über die eingerichtete Steuerverbindung zwischen dem mobilen Endgerät (MD) über die Nahfeldkommunikationsverbindung (NFC) an die Steuerungsvorrichtung (CTR) übertragen wird; und
- wobei die Steuerungsvorrichtung (CTR) den Ladevorgang der Ladesäule (CS) aufgrund der Steuerungsanweisung steuert.

6. Verfahren gemäß einem der vorgenannten Patentansprüche, wobei von der Steuerungsvorrichtung (CTR) mindestens eine Ladestatusmeldung gebildet wird, welche über die eingerichtete Steuerverbindung an das mobile Endgerät (MD) übertragen wird.

7. Verfahren gemäß einem der vorgenannten Patentansprüche, **dadurch gekennzeichnet, dass** die Prüfung mindestens eines Berechtigungsnachweises (JCRED1, JCRED2) zumindest teilweise in Zusammenarbeit mit mindestens einem Autorisierungsserver (SRV1,SRV2) erfolgt.

8. Verfahren gemäß einem der vorgenannten Patentansprüche, **dadurch gekennzeichnet, dass** über die Nahfeldkommunikationsverbindung (NFC) eine kryptographisch gesicherte Datenverbindung eingerichtet wird.

9. Verfahren gemäß einem der vorgenannten Patentansprüche, **dadurch gekennzeichnet, dass** der zweite Berechtigungsnachweis (JCRED2) und/oder der erste Berechtigungsnachweis (JCRED1) ein digitales Zertifikat enthält.

10. Verfahren gemäß einem der vorgenannten Patentansprüche 1 bis 8, **dadurch gekennzeichnet, dass** der zweite Berechtigungsnachweis (JCRED2) und/oder der erste Berechtigungsnachweis (JCRED1) Bestandteil eines digitalen Zertifikats ist.

11. Verfahren gemäß einem der vorgenannten Patentansprüche, **dadurch gekennzeichnet, dass** die Nahfeldkommunikationsverbindung (NFC) gemäß einem Kommunikationsstand der Standard-Familie IEEE 802.11 ausgestaltet ist.

12. Verfahren gemäß einem der vorgenannten Patentansprüche 1 bis 10, **dadurch gekennzeichnet, dass** die Nahfeldkommunikationsverbindung (NFC) gemäß einem Kommunikationsstand IEEE 802.15.1 ausgestaltet ist.

13. Verfahren gemäß einem der vorgenannten Patentansprüche 1 bis 10, **dadurch gekennzeichnet, dass** die Nahfeldkommunikationsverbindung (NFC) gemäß Bluetooth Spezifikation 4.2 und/oder Weiterentwicklungen gemäß Bluetooth Low Energy Spezifikationen ausgestaltet ist.

14. Verfahren gemäß einem der vorgenannten Patentansprüche 1 bis 10, **dadurch gekennzeichnet, dass** die Nahfeldkommunikationsverbindung (NFC) zum kontaktlosen Datenaustausch per elektromagnetischer Induktion mittels loser gekoppelter Spulen ausgestaltet ist.

15. Computerprogrammprodukt mit einem auf einem maschinenlesbaren Träger gespeicherten Programmcode zur Durchführung eines Verfahrens nach einem der vorgenannten Patentansprüche in Zusammenarbeit mit der Steuerungsvorrichtung (CTR), wenn das Programm auf dem mobilen (MD) Endgerät abläuft.

## Claims

1. A method for controlling a charging operation of a vehicle (EV) at a charging station (CS), wherein, independent of an identification means initially used for the approval of charging, a control link for controlling the charging operation is provided by means of a second proof of authorization (JCRED2) stored in a mobile terminal device (MD), comprising the following steps:
a) using, by a control device (CTR) allocated to the charging station (CC), a first proof of authorization (JCRED1) used for a start of the charging operation;
b) transmitting, via a near-field communication link (NFC), the first proof of authorization (JCRED1) or the terminal-side second proof of authorization (JCRED2) between the mobile terminal device (MD) and the control device (CTR) allocated to the charging station (CC);
c) verifying, in pairs, the first proof of authorization (JCRED1) by means of the second proof of authorization (JCRED2); and
d) in case of a positive verification result, establishing a control link between the mobile terminal device (MD) and the control device (CTR) via the near field communication link (NFC).

2. The method according to claim 1, wherein the control of the charging operation via the control link comprises at least monitoring the charging operation, modifying the charging operation, terminating the charging operation and/or temporarily stopping the charging operation.

3. The method according to one of the preceding claims,
- wherein for a transmission according to step b) the first proof of authorization (JCRED1) is transmitted from the control device (CTR) to the mobile terminal device (MD) via the near field communication link (NFC); and
- wherein the pairwise verification according to step c) is carried out in the mobile terminal device (MD).

4. The method according to one of the preceding claims 1 and 2,
- wherein for a transmission according to step b) the second proof of authorization (JCRED2) is transmitted from the mobile terminal device (MD) to the control device (CTR) via the near-field communication link (NFC); and
- wherein the pairwise verification according to step c) is carried out in the control device (CTR).

5. The method according to one of the preceding claims,
- wherein, following a control instruction received at the mobile terminal device (MD), the control instruction is transmitted between the mobile terminal device (MD) to the control device (CTR) via the established control link and the near field communication link (NFC); and
- wherein the control device (CTR) controls the charging operation of the charging station (CS) based on the control instruction.

6. The method according to one of the preceding claims, wherein the control device (CTR) generates at least one charging status message which is transmitted via the established control link to the mobile terminal device (MD).

7. The method according to one of the preceding claims, **characterized in that** the verification of at least one proof of authorization (JCRED1, JCRED2) is carried out at least partially in cooperation with at least one authorization server (SRV1, SRV2).

8. The method according to one of the preceding claims, **characterized in that** a cryptographically protected data link is established via the near-field communication link (NFC).

9. The method according to one of the preceding claims, **characterized in that** the second proof of authorization (JCRED2) and/or the first proof of authorization (JCRED1) contains a digital certificate.

10. The method according to one of the preceding claims 1 to 8, **characterized in that** the second proof of authorization (JCRED2) and/or the first proof of authorization (JCRED1) is part of a digital certificate.

11. The method according to one of the preceding claims, **characterized in that** the near-field communication link (NFC) is designed according to a communication standard of the standard family IEEE 802.11.

12. The method according to one of the preceding claims 1 to 10, **characterized in that** the near-field communication link (NFC) is designed according to a communication standard IEEE 802.15.1.

13. The method according to one of the preceding claims 1 to 10, **characterized in that** the near field communication link (NFC) is designed according to Bluetooth specification 4.2 and/or further developments according to Bluetooth Low Energy specifications.

14. The method according to one of the preceding claims 1 to 10, **characterized in that** the near-field communication link (NFC) is designed for contactless data exchange by electromagnetic induction by means of loosely coupled coils.

15. A computer program product comprising program code stored on a machine-readable carrier for carrying out a method according to one of the preceding claims in cooperation with the control device (CTR) when the program is executed on the mobile terminal device (MD).

## Revendications

1. Procédé de commande d'un processus de charge d'un véhicule (EV) à une colonne de charge (CS), dans lequel une connexion de commande prévue pour la commande du processus de charge est mise à disposition indépendamment d'un moyen d'identification utilisé au début pour l'autorisation de charge à l'aide d'une seconde accréditation (JCRED2) consignée dans un terminal mobile (MD), comprenant les étapes suivantes :
a) utilisation d'une première accréditation (JCRED1) utilisée pour un début du processus de charge par un dispositif de commande (CTR) associé à la colonne de charge (CC) ;
b) transmission de la première accréditation (JCRED1) ou de la seconde accréditation côté terminal (JCRED2) entre le terminal mobile (MD) et le dispositif de commande (CTR) associé à la colonne de charge (CC) par le biais d'une connexion de communication en champ proche (NFC) ;
c) contrôle par paire de la première accréditation (JCRED1) à l'aide de la seconde accréditation (JCRED2) ; et
d) en cas de résultat positif du contrôle, configuration d'une connexion de commande entre le terminal mobile (MD) par le biais de la connexion de communication en champ proche (NFC) au dispositif de commande (CTR).

2. Procédé selon la revendication 1, dans lequel la commande du processus de charge par le biais de la connexion de commande comprend au moins une surveillance du processus de charge, une modification du processus de charge, une fin du processus de charge et/ou un arrêt transitoire du processus de charge.

3. Procédé selon une des revendications précédentes,
- dans lequel un envoi de la première accréditation (JCRED1) pour une transmission selon l'étape b) s'effectue par le dispositif de commande (CTR) par le biais de la connexion de communication en champ proche (NFC) au terminal mobile (MD) ; et
- dans lequel le contrôle par paire selon l'étape c) est réalisé dans le terminal mobile (MD).

4. Procédé selon une des revendications précédentes 1 et 2,
- dans lequel un envoi de la seconde accréditation (JCRED2) pour une transmission selon l'étape b) s'effectue par le terminal mobile (MD) par le biais de la connexion de communication en champ proche (NFC) au dispositif de commande (CTR) ; et
- dans lequel le contrôle par paire selon l'étape c) est réalisé dans le dispositif de commande (CTR).

5. Procédé selon une des revendications précédentes,
- dans lequel après une instruction de commande reçue sur le terminal mobile (MD), l'instruction de commande est transmise par le biais de la connexion de commande configurée entre le terminal mobile (MD) par le biais de la connexion de communication en champ proche (NFC) au dispositif de commande (CTR) ; et
- dans lequel le dispositif de commande (CTR) commande le processus de charge de la colonne de charge (CS) du fait de l'instruction de commande.

6. Procédé selon une des revendications précédentes, dans lequel au moins un message de statut de charge est formé par le dispositif de commande (CTR), lequel est transmis par le biais de la connexion de commande configurée au terminal mobile (MD).

7. Procédé selon une des revendications précédentes, **caractérisé en ce que** le contrôle d'au moins une accréditation (JCRED1, JCRED2) s'effectue au moins partiellement en collaboration avec au moins un serveur d'autorisation (SRV1, SRV2).

8. Procédé selon une des revendications précédentes, **caractérisé en ce qu'**une connexion de données sécurisée de manière cryptographique est configurée par le biais de la connexion de communication en champ proche (NFC).

9. Procédé selon une des revendications précédentes, **caractérisé en ce que** la seconde accréditation (JCRED2) et/ou la première accréditation (JCRED1) contient un certificat numérique.

10. Procédé selon une des revendications précédentes 1 à 8, **caractérisé en ce que** la seconde accréditation (JCRED2) et/ou la première accréditation (JCRED1) fait partie d'un certificat numérique.

11. Procédé selon une des revendications précédentes, **caractérisé en ce que** la connexion de communication en champ proche (NFC) est mise en œuvre conformément à un niveau de communication de la famille de normes IEEE 802.11.

12. Procédé selon une des revendications précédentes 1 à 10, **caractérisé en ce que** la connexion de communication en champ proche (NFC) est mise en œuvre conformément à un niveau de communication IEEE 802.15.1.

13. Procédé selon une des revendications précédentes 1 à 10, **caractérisé en ce que** la connexion de communication en champ proche (NFC) est mise en œuvre conformément à la spécification Bluetooth 4.2 et/ou des développements conformément à des spécifications Bluetooth Low Energy.

14. Procédé selon une des revendications précédentes 1 à 10, **caractérisé en ce que** la connexion de communication en champ proche (NFC) est mise en œuvre pour l'échange de données sans contact par induction électromagnétique au moyen de bobines couplées détachées.

15. Produit de programme informatique avec un code de programme mémorisé sur un support lisible par machine pour la réalisation d'un procédé selon une des revendications précédentes en collaboration avec le dispositif de commande (CTR), lorsque le programme s'exécute sur le terminal mobile (MD).
